(19) **Europäisches Patentamt / European Patent Office / Office européen des brevets**

(11) **EP 1 462 794 B2**

(12) # NEW EUROPEAN PATENT SPECIFICATION
### After opposition procedure

(45) Date of publication and mention
of the opposition decision:
**30.08.2017 Bulletin 2017/35**

(45) Mention of the grant of the patent:
**07.11.2007 Bulletin 2007/45**

(21) Application number: **03257992.2**

(22) Date of filing: **18.12.2003**

(51) Int Cl.:
*G01N 23/00* (2006.01)    *H01J 35/00* (2006.01)
*H05G 1/04* (2006.01)

(54) **High flux x-ray source**

Hochfluss-Röntgenquelle

Source rayons X à haut flux

(84) Designated Contracting States:
**DE FR GB**

(30) Priority: **25.03.2003 GB 0306829**

(43) Date of publication of application:
**29.09.2004 Bulletin 2004/40**

(73) Proprietor: **Rigaku Corporation
Akishima-shi,
Tokyo 196-8666 (JP)**

(72) Inventor: **Kucharczyk, Damian
5018 Wroclaw (PL)**

(74) Representative: **Patent- und Rechtsanwälte
Dr. Solf & Zapf et al
Candidplatz 15
81543 München (DE)**

(56) References cited:
**EP-A- 1 193 492      EP-A- 1 365 231
DE-A1- 3 940 251      DE-A1- 4 130 556**

## Description

### Field of the Invention

X-ray diffraction is an analytical technique for obtaining information on the structure of atoms or molecules in a crystal from the diffraction pattern that is produced by diffraction of rays by the crystal's atomic planes. The present invention generally relates to a high flux X-ray source for use in X-ray diffraction techniques for analysing specimens by irradiating with X-rays and, more particularly, to a high flux X-ray source of a type utilising an artificial multi-layered optic with a sealed X-ray tube.

### Background to the Invention

X-ray sources currently utilised in the field of single crystal X-ray diffraction comprise two main types. A first type, the sealed X-ray tube, is traditionally utilised where a metal target (anode) typically of a metal such as molybdenum, copper or silver is bombarded with electrons from a tungsten filament and mounted within a vacuum. A sealed ray tube is commonly used in combination with a graphite monochromator and a collimator and is typically run up to a maximum power of 2-3kW as the anode will not support a much greater heat load without being destroyed. This heat is dissipated through water cooling of the anode. In order to realise a greater intensity X-ray source, a greater power density of electrons needs to be placed on the anode. To achieve this, a second type of source, the rotating anode, was developed. In a rotating anode source, the anode consists of a rotating water cooled drum, the external surface of which has been deposited with the metal target. The drum sits in a high vacuum enclosure and the rotating anode is run at powers of up to 18 kW, although a more typical power is 5 kW.

The sealed X-ray tube has the advantage that the apparatus for its use is compact, reliable, and easy to use and maintain. The extent of maintenance is generally limited to the change over of a burnt out X-ray tube, which typically last 10,000 hours. Change over and alignment of the replacement X-ray tube in a traditional sealed tube set-up can take in the region of 1-2 hrs. Recent improvements to the traditional set-up, which utilise specific geometries have greatly reduced this change over and alignment time to approximately 10-30 mins. By comparison the rotating anode which can be up to 10 times larger, requires much greater maintenance and attention. In particular, the electron producing filament in the rotating anode requires change over on bum out typically ever 6 weeks, and the rotating anode drum requires replacement at least every 6 months. In each case, the changeover and required re-alignment can take a total of 3-8 hrs.

A comparison of the X-ray intensity out put can be obtained from a simple appreciation of the classical formula describing the relationship between the intensity $I_K$ of $K_\alpha$ X-rays produced by an X-ray source and the operating voltage V (in kV) and current i (in mA)

$$I_K = iB(V - V_K)^{1.5}$$

where $V_K$ is the excitation voltage for K series radiation in kV and B is a constant of proportionality. By way of example, a rotating anode running at 5kW (typically 50kV and 100 mA) only generates in the region of 2.5 times the X-ray intensity generated by a sealed tube running at 2kW power (typically 50 kV and 40mA), since the term $B(V - V_K)^{1.5}$ is identical in each case.

The rotating anode source is often used in combination with optics, including mirrors. Reports in both the literature and patent applications concerning such systems are numerous, and detail the construction of the optics in terms of both the deposition of layers of specific chemical materials and the optimisation of specific shapes which serve to focus X-rays, as well as the specific distances and angles required for optimal performance of the optics. The most successful of the optics produced to date are the multi-layer optics, which have enabled a great increase in the usable X-ray intensity through the focussing of a large amount of the X-rays emitted from the source.

Compact X-ray sources which use a sealed X-ray tube could also benefit from the use of appropriate optics. The efficiency of conversion of usable X-rays from a sealed X-ray tube is typical 1%. But by using suitable optics, including mirrors, it is theoretically possible to harvest a greater proportion of these X-rays and to focus them tightly to provide an increased level of usable X-ray intensity. Furthermore it has been indicated that the use of multi-layer optics has the ability to increase the flux from a fine focus sealed X-ray tube by more than an order of magnitude over that obtained with total reflection mirrors. However, depending on design and configuration, such optics may increase complexity, reducing the ease of maintenance of the source and reducing the benefits of employing a sealed tube.

DE-A1-3940251 discloses a sealed X-ray tube with an ellipsoidal multilayer mirror inside the sealed housing. DE -A1-4130566 discloses the combination of a sealed X-ray tube with a multilayer monochromator in an X-ray fluorescence experimental chamber. EP-A1-1193492 discloses an X-ray tube, to which a collimator waveguide is mounted in a housing which can be adjusted. The document "cross-coupled Göbel mirrors for PLATFORM", installation manual, Part Number 269-020502, by Bruker AXS, discloses an X-ray tube, cross-coupled Göbel mirrors aligned on a platform system, and a collimator.

There are currently no X-ray sources that combine multilayer optics outside a sealed X-ray tube to achieve X-ray flux levels approaching those obtainable from the much larger rotating anode based systems. There is therefore a need for a compact X-ray source which can deliver the flux levels required for numerous applications, including the irradiation of samples in life science investigations, but which has the appropriate ease of maintenance and enables simple re-alignment when replacement of the sealed X-ray tube is required.

## Summary of the Invention

According to one aspect of the present invention, a high flux X-ray source according to the independent claim 1 is provided. Such a high flux X-ray source comprises:

> a sealed X-ray tube;
> an optic housing containing a multi-layer optic for collecting and focussing X-rays generated in the sealed X-ray tube, wherein the multi-layer optic is located at a predetermined distance from the sealed X-ray tube and the optic housing is adjustable relative to the sealed X-ray tube; and,
> an X-ray beam conditioner, the beam conditioner being adjustable relative to the optic housing. The multi-layer optic is mounted in a fixed position within the optic housing by affixing the multi-layer optic to the wall of the optic housing by glue and is a confocal mirror comprising two extended multi-layer reflectors of right angles.

The use of a multi-layer optic provides for the efficient collection and focussing of X-rays generated in a compact sealed tube. The wavelength dependence of a multi-layer optic also enables it to act as a monochromator, providing a beam of X-rays with a predetermined range of photon energy.

A multi-layer optic comprises a confocal mirror. The multi-layer optic is glued into position within the optic housing.

Preferably, the optic housing is adjustable relative to the sealed X-ray tube by independent rotation in each of a first pair of substantially orthogonal directions.

Preferably, the optic housing is also adjustable relative to the sealed X-ray tube by independent translation in each of a second pair of substantially orthogonal directions.

The first pair and second pair of orthogonal directions may be coincident. Alternatively, they may be orientated at an angle to one another, including 45°.

The use of orthogonal axes of adjustment affords quick and easy alignment of the optic relative to the direction of the X-rays emerging from the sealed X-ray tube and may also offer control over the size and intensity of the X-ray focal spot.

The presence of an X-ray beam conditioner provides for additional collection and beam shaping of the X-rays together with further directional control of the X-ray beam onto a particular location or target sample. The beam conditioner may take a number of forms, including that of an X-ray collimator, according to the desired final spatial form of the X-ray beam.

Preferably, the X-ray beam conditioner is detachable.

Preferably, the X-ray beam conditioner is adjustable relative to the optic housing by independent tilt controls in each of a pair of substantially orthogonal directions.

Preferably, the X-ray source further comprises a shutter housing located between the sealed X-ray tube and the optic housing.

Preferably, the shutter housing is adapted to receive a portion of the optic housing.

This arrangement allows simple and consistent alignment of the optic housing relative to the sealed X-ray tube during both first assembly of the source and reassembly of the source during replacement of the sealed X-ray tube, for example.

Preferably, the optic housing is flooded with an inert gas to reduce damage to the multi-layer optic and to reduce scattering of the X-rays during propagation through the optic housing. Preferably, the inert gas is helium.

Preferably, the X-ray source further comprises a moveable X-ray beamstop Preferably, the beamstop is located beyond the X-ray beam focus.

A moveable X-ray beamstop allows for the safe termination of the X-ray beam during operation whilst also providing the facility to displace the beamstop for easy placement of a target sample prior to operation.

According to another aspect of the present invention, X-ray irradiation apparatus comprises an X-ray source according to the one aspect of the present invention and means for holding a sample in the path of the focussing X-rays.

Thus the present invention addresses the need for a compact high flux X-ray source by combining sealed X-ray tube technology with high performance multi-layer optics contained within a housing that is easily located relative to the X-ray tube and can be finely adjusted for optimum collection and focussing of the X-rays. The multi-layer optics may also serve as a beam monochromator. A compact adjustable beam conditioner, which may be a collimator, ensures that the X-ray beam has the desired final spatial form for a given application.

## Brief Description of the Drawings

An example of the present invention will now be described in detail with reference to the accompanying drawings, in which:

> Figure 1 shows a perspective view of a high flux X-ray source according to the present invention with detached conditioner and X-ray beamstop rotated by 90°;
> Figure 2 shows a perspective view of the high flux X-ray source and the adjustment screws for alignment of the multi-layer optics and beam conditioner;

Figures 3A and 3B show, respectively, a side view and cross-sectional view A-A of the high flux X-ray source;

Figures 4A, 4B and 4C show, respectively, a side view and cross-sectional views B-B and C-C of the high flux X-ray source; and,

Figure 5 shows a perspective view of the high flux X-ray source mounted on a stand with screws for final directional adjustment.

**Detailed Description**

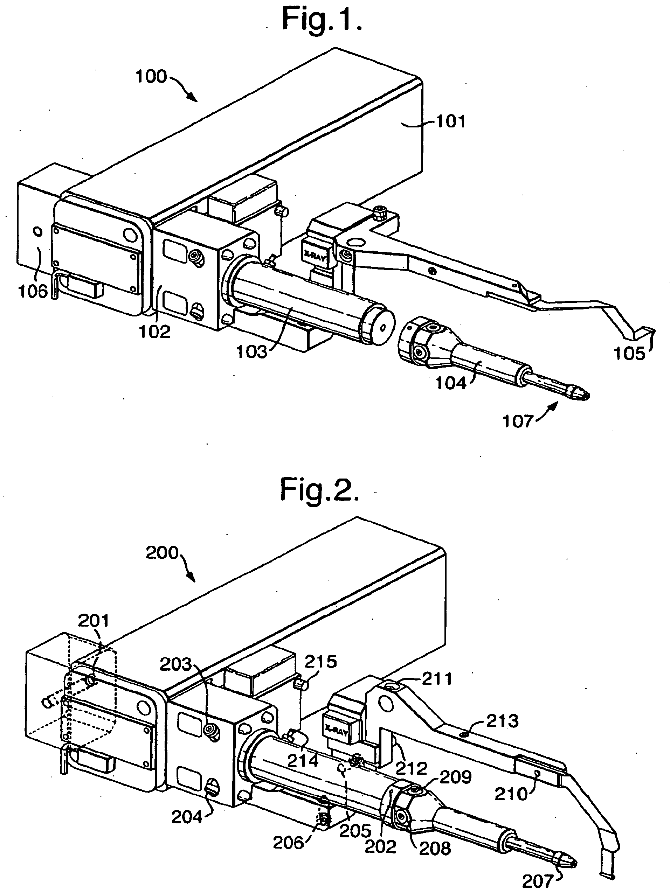

Figure 1 shows an embodiment of the present invention, which applies a novel optical arrangement of a sealed X-ray tube with a multi-layer mirror optic to the construction of a high flux X-ray source 100 for increased efficiency of collection and focussing of X-ray photons generated in the sealed X-ray tube. The construction of the high flux X-ray source comprises an X-ray tube shield 101 containing the sealed X-ray tube (not shown), a fast X-ray shutter located in a shutter housing 102, a multi-layer optic housing 103 containing a multi-layer optic, an X-ray beam conditioner or collimator 104, X-ray beam stop 105 and a counter weight 106 for counterbalancing the weight of the beam directing portion of the source when mounted on a stand. The nozzle region 107 may further contain a $K_\beta$ filter for filtering out residual unwanted $K_\beta$ radiation. As indicated, the X-ray beam conditioner or collimator 104 section is detachable from the rest of the source.

The X-ray source has been designed to be of a compact construction, occupying a footprint in the region of 0.15m$^2$ or less. Therefore, an example of the approximate overall dimensions might be 0.32x0.46x0.08m. Furthermore, the source has been constructed with a minimum number of adjustments to enable ease of use and maintenance, with a minimum of downtime. The source has been designed with use in small molecule crystallography and life science applications particularly in mind, where the irradiation of samples would otherwise require the X-ray intensity provided by a rotating anode or synchrotron X-ray source.

The X-rays are generated in the copper anode sealed tube and emitted through the tubes' beryllium window before passing through a hole in the X-ray tube shield 101. This hole is closed by a moveable shutter located in the shutter housing 102. When the shutter is open the X-rays pass through a helium flooded path and at a critical distance the X-rays are collected and focused by a multi-layer optic within the multi-layer optic housing 103, the position of which can be fine tuned to affect the size and intensity of the X-ray focal spot. The focused X-ray beam then passes along the collimator or beam conditioner 104 and may pass through a Ni foil $K_\beta$ filter, and/or a kapton window. At this point the X-ray beam passes into air and is focussed at a point where a sample would be placed for irradiation. A proportion of the X-ray beam continues straight through the sample and falls on the moveable lead packed beamstop 105. The X-ray beamstop 105 has been designed to permit rotation through 90 degrees to provide greater accessibility for mounting of the sample for irradiation. Once the optics are aligned then a maximal X-ray intensity should have been achieved. These X-rays then need to be directed in the correct direction, which is onto the sample position. This is achieved by five adjustment screws located on the base of the assembly.

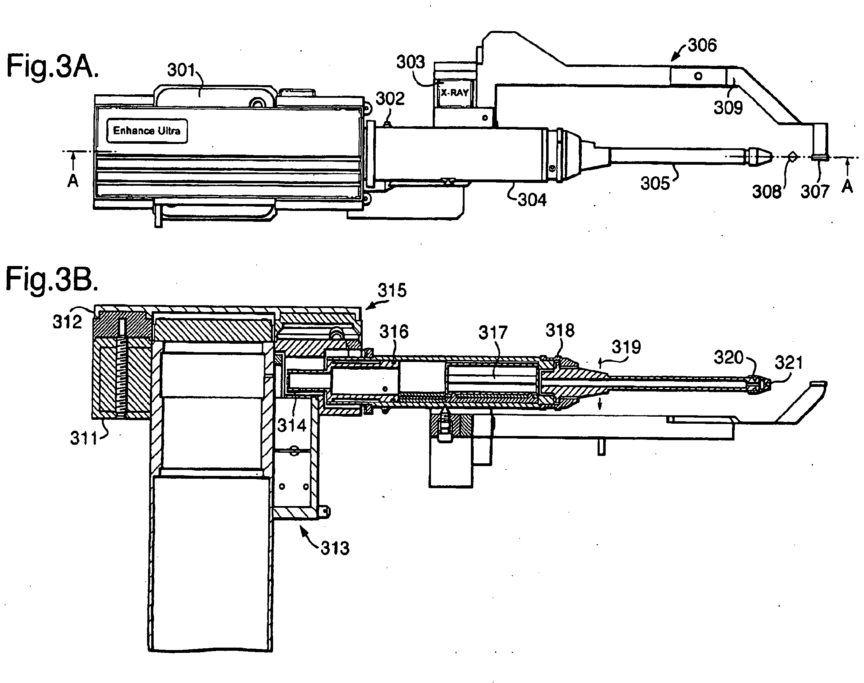

We now consider the alignment and construction of the source in more detail with reference to Figures 2 to 4. The X-ray tube typically utilised is a ceramic long fine focus 2kW sealed tube of copper anode and is inserted into the brass tube shield from the front of the X-ray source. The X-ray tube shield, has a circular hole critically placed to allow the X-rays generated from the X-ray tube and emitted through the tube's beryllium window to be collected and passed to the multi-layer optic. Directly attached to the right hand-side of the tube shield is the X-ray fast shutter housing located in a 1 mm recess in the external surface of the X-ray tube shield.

The X-ray shutter consists of a piece of lead attached to one end of a moveable arm the other end of which is attached to a high precision stepper motor of high speed response time, typically 3 milliseconds, the shutter can thus be moved over a range of typically 6 degrees. The shutter is electronically controlled and its status can be constantly monitored. The shutter can be easy interchanged and is secured in place by the screw 215. By releasing this screw the shutter assembly 313 can be withdrawn from the rear of the X-ray shutter housing 315. On the side parallel to the aperture in the X-ray housing is an aperture for location of the optic housing unit 304. The optic housing 304 is inserted into this aperture and extends inside the X-ray shutter housing 315. An X-ray leak proof coupling is afforded by a flexible washer assembly.

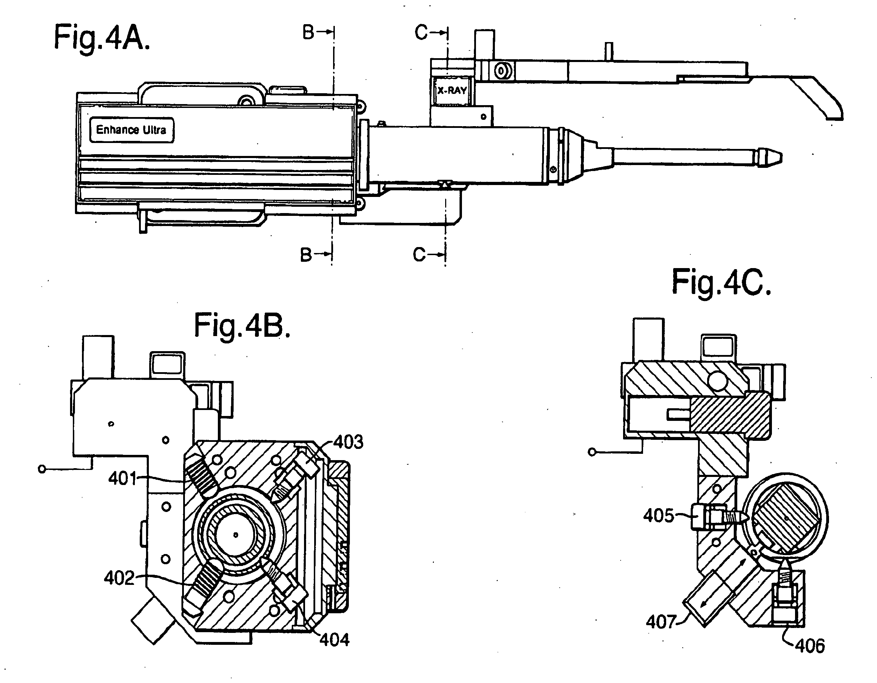

Extending through the X-ray shutter housing are the two adjustment screws 203 and 204. These serve to apply pressure to the optic housing where it extends inside the X-ray shutter housing 315. By adjustment of these screws pressure can be applied to the optic housing 304 in both the x and y directions and the optic housing thus caused to pivot on the vertical and horizontal pivot screws 205 and 206. Release of the screws 203 and 204 causes the X-ray optic housing 304 to return to its previous position due to two compression springs which are mounted in line with the screws 203 and 204. This arrangement is shown in more detail in Figure 4B, including the two compression springs 401, 402 which oppose the adjustment screws 403 (203) and 404 (204).

Screw 205 serves as both a pivot point for the vertical direction and an adjustment screw in the horizontal (x) plane. Tightening of screw 205 applies pressure to the X-ray optic housing and affords positional movement of the X-ray optic housing in the horizontal (x) plane, which is caused to pivot on the screw 206. Release of screw 205 affords positional movement of the X-ray optic housing 304 in the horizontal (x) plane and in the direction of the screw due to a tension spring. This arrangement is shown in more detail in Figure 4C, including the tension spring 407 which counteracts the adjustment screws 405 (205) and 406 (206).

Screw 202 is one of three grub screws which serve to hold in place the detachable collimator / beam conditioner assembly. Internally this is sealed by an O-ring 318 to prevent leakage of helium gas at this point. The aperture of the beam conditioner is adjustable in x and y directions 319 through the use of screws 208 and 209. On screwing in screw 208 or 209, pressure is applied to the beam conditioner causing it to tilt and thus reposition the final aperture. On releasing the screws, the movement is reversed due to compression springs mounted in line with the screws. The final 0.4mm aperture 321 is contained in a removable end cap 207, which allows for this to be exchanged for various sizes. The end of the beam conditioner in the X-ray beam path is sealed with a kapton window and the helium gas exits by another path close to the final aperture.

The internal construction of the present invention is such that the X-ray optic housing 304 extends to a position close to the X-ray aperture in the X-ray tube shield 101. In the intervening space is mounted the X-ray shutter lead block. The end of the X-ray optic housing 304 nearest the X-ray tube is closed with a kapton window 314, with the other end open. Within the X-ray optic housing 304 are mounted the multi-layer optics 317, which are in a fixed position. The optics is affixed to the wall of the housing by glue. Either a single multi-layer optic or a combination of multi-layer optics may be used. Multi-layer optics are usually constructed from several layers of lighter and heavier materials giving rise to a distributed reflecting structure. The structure may even be graded. Examples of suitable optics include the confocal mirror and the sagittal mirror. The confocal mirror typically comprises two extended multi-layer reflectors at right angles, and so the X-rays collected undergo a double bounce as they propagate through the optic housing. Due to the wavelength Bragg selectivity of the reflector, the double reflection can act as an efficient monochromator, providing a substantial filtering of unwanted X-ray wavelengths and reducing the need for a separate filter.

The X-ray beam path through the present invention is maintained under a constant flow of helium gas which is supplied via the helium entry port 214 (302) and fed internally along a narrow diameter tube which opens into to the X-ray optic housing at a point close to the kapton window 314 at the X-ray tube end. The various joints along the helium flow path are sealed by means of O-rings 316, 318, 320. The presence of helium serves to reduce possible damage to the sensitive multi-layer optics 317 which are subjected to X-rays and also to provide the maximum X-ray intensity to be placed on the sample. X-ray intensity is reduced with distance from the source as a result of scatter from the air. This reduction of intensity is minimised by replacing air with helium.

The counterweight 311 consists of a lead filled block which is secured on the left side of the X-ray tube shield and serves to counterweight the combined weight of the X-ray shutter 313, X-ray shutter housing 315, X-ray optic housing 304, collimator / beam conditioner 305 and beamstop assembly 306 which are mounted on the right of the X-ray tube shield. A screw 201 extends through the counterweight 311 to allow a front face panel 312 to be mounted to cover the adjustment screws 203 and 204 and the base 301 of the X-ray tube.

The X-ray beamstop mount 306 incorporates an X-ray warning lamp 303 which is connected via an external cable to the electronics of the fast X-ray shutter. When the shutter is open and X-rays are exposed the warning lamp is illuminated. The beamstop needs to be aligned so that the lead packed tip is aligned in the X-ray beam. Alignment of the beamstop 307 is achieved in the horizontal (x) direction using the screw 212 and in the vertical (y) direction using screw 211. The beamstop can be rotated through 90 degrees by pressure applied in the region of the screw 211, via a thumb hold located on the front of the device. A reproducible position of the beamstop is achieved as the beamstop incorporates a spring loaded ball bearing which locates in sockets at the 'up' and 'down' position of the beamstop, these positions being at 90 degrees to each other. On screwing in screw 211 or 212 the movement causes the ball bearing spring to be indirectly compressed. The 'down' socket is designed with a gradient on one side, which causes the spring compression to increase as screw 212 is screwed in. On releasing screw 211 or 212 the spring force acting on the ball bearing resting on the gradient causes the beam stop to move in the reverse direction. The user may rotate the beam stop to the 'up' position to facilitate sample handling and after returning to the 'down' position the previously aligned position is automatically re-established. The entire beam stop may be detached by removing screw 213. The distance of the beam stop 307 from the location of the sample 308 is adjustable on a slider 309, which is locked with screw 210.

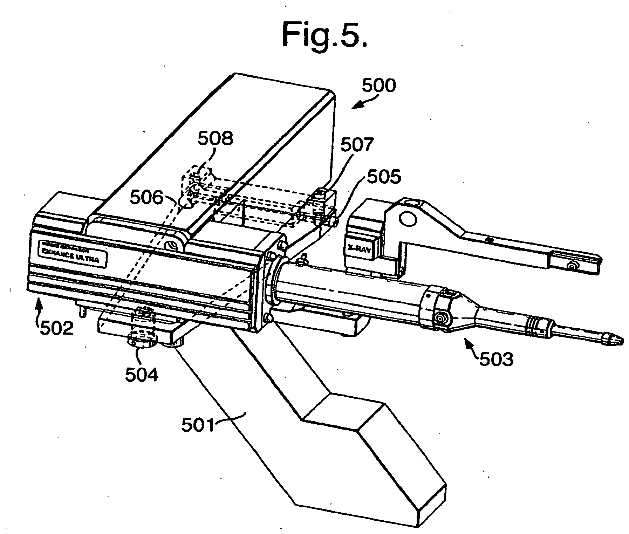

Figure 5 illustrates the X-ray source 500 mounted on a stand 501, with the counterweight 502 serving to counterbalance the weight of the beam directing portion 503 of the source. The complete source assembly 500 can be pointed in the correct horizontal and vertical position using five screws located on the base. Three of the screws, one at the front 504 and two at the back 507 and 508, adjust the vertical position by applying pressure to the underside of the X-ray tube shield. The remaining two screws 505 and 506 can be adjusted against each other so to apply pressure to the back left and right hand sides of the X-ray tube shield, respectively. These two screws afford movement of the complete assembly in the horizontal plane. Thus, once the source has been optimised for maximum X-ray flux concentration by adjustment of the multi-optic housing and beam conditioner/collimator, the beam can be accurately targeted on a sample by adjustment of the base screws.

**Claims**

1. A high flux X-ray source (100) comprises:

   a sealed X-ray tube;
   an optic housing (103) containing a multi-layer optic (317) for collecting and focussing X-rays generated in the sealed X-ray tube, wherein the multi-layer optic is located at a predetermined distance from the sealed X-ray tube and the optic housing is adjustable relative to the sealed X-ray tube; and,
   an X-ray beam conditioner (104), the beam conditioner being adjustable relative to the optic housing;
   wherein the multi-layer optic (317) is mounted in a fixed position within the optic housing (103) by affixing the multi-layer optic to the wall of the optic housing by glue and is a confocal mirror comprising two extended multi-layer reflectors at right angles.

2. An X-ray source according to claim 1, wherein the optic housing is adjustable (203, 204) relative to the sealed X-ray tube by independent rotation in each of a first pair of substantially orthogonal directions.

3. An X-ray source according to claims 1 to 2, wherein the optic housing is adjustable (205, 206) relative to the sealed X-ray tube by independent translation in each of a second pair of substantially orthogonal directions.

4. An X-ray source according to any preceding claim, further comprising a shutter housing (315) adapted to receive a portion of the optic housing (304).

5. An X-ray source according to any preceding claim, wherein the optic housing is filled with an inert gas.

6. An X-ray source according to claim 5, wherein the inert gas is helium.

7. An X-ray source according to any preceding claim, further comprising a moveable X-ray beam stop (307).

8. X-ray irradiation apparatus comprising an X-ray source according to any preceding claim, and means for holding a sample in the path of the focussing X-rays.

**Patentansprüche**

1. Hochfluss-Röntgenquelle (100), die Folgendes aufweist:

   - eine abgedichtete Röntgenröhre;
   - ein Optikgehäuse (103), das eine mehrschichtige Optik (317) zum Zusammenfassen und Fokussieren von in der abgedichteten Röntgenröhre erzeugten Röntgenstrahlen enthält, wobei die mehrschichtige Optik an einem vorbestimmten Abstand von der abgedichteten Röntgenröhre angeordnet ist und das Optikgehäuse bezüglich der abgedichteten Röntgenröhre einstellbar ist; und
   - einen Röntgenstrahlkonditionierer (104), der bezüglich des Optikgehäuses einstellbar ist,

   wobei die mehrschichtige Optik (317) durch Befestigen der mehrschichtigen Optik an der Wand des Optikgehäuses mittels Kleber an einer festen Position innerhalb des Optikgehäuses (103) angebracht ist und ein konfokaler Spiegel ist, aufweisend zwei verlängerte mehrschichtige Reflektoren in rechtem Winkel.

2. Röntgenquelle gemäß Anspruch 1, wobei das Optikgehäuse bezüglich der abgedichteten Röntgenröhre durch die unabhängige Drehung in jede eines ersten Paares von im Wesentlichen rechtwinkligen Richtungen einstellbar (203, 204) ist.

3. Röntgenquelle gemäß den Ansprüchen 1 bis 2, wobei das Optikgehäuse bezüglich der abgedichteten Röntgenröhre durch unabhängige Translation in jede eines zweiten Paares von im Wesentlichen rechtwinkligen Richtungen einstellbar (205, 206) ist.

4. Röntgenquelle gemäß einem der vorhergehenden Ansprüche, die ferner ein Verschlussgehäuse (315) zum Aufnehmen eines Teils des Optikgehäuses (304) aufweist.

5. Röntgenquelle gemäß einem der vorhergehenden Ansprüche, wobei das Optikgehäuse mit einem Inertgas gefüllt ist.

6. Röntgenquelle gemäß Anspruch 5, wobei das Inertgas Helium ist.

7. Röntgenquelle gemäß einem der vorhergehenden Ansprüche, die ferner eine bewegliche Röntgenstrahlsperre (307) aufweist.

8. Röntgen-Bestrahlungsvorrichtung mit einer Röntgenquelle gemäß einem der vorhergehenden Ansprüche und Mittel zum Halten eines Musters im Pfad der fokussierten Röntgenstrahlung.

**Revendications**

1. Source de rayons X à haut flux (100) comprend:

- un tube à rayons X scellé;

- un boîtier optique (103) contenant une optique multicouche (317) pour recueillir et focaliser des rayons X produits dans le tube à rayons X scellé, dans lequel l'optique multicouche est située à une distance prédéterminée du tube à rayons X scellé et le boîtier de l'optique peut être ajusté par rapport au tube à rayons X scellé; et,

un dispositif de conditionnement de faisceau de rayons X (104), le dispositif de conditionnement de faisceau pouvant être ajusté par rapport au boîtier de l'optique;

que l'optique multicouche (317) est montée en position fixe dans le boîtier optique (103) en collant l'optique multicouche sur le paroi du boîtier optique et est un miroir confocal présentant deux multicouche réflecteurs prolongé aux angles droits.

2. Source de rayons X selon la revendication 1, dans laquelle le boîtier optique peut être ajusté (203, 204) par rapport au tube à rayons X scellé par une rotation indépendante dans chaque direction d'une premiere paire de directions essentiellement orthogonales.

3. Source de rayons X selon l'une quelconque des revendications 1 a 2, dans laquelle le boîtier de l'optique peut être ajuste (205, 206) par rapport au tube à rayons X scellé par une translation indépendante dans chaque direction d'une seconde paire de directions essentiellement orthogonales.

4. Source de rayons X selon l'une quelconque des revendications précédentes, comprenant en outre un boîtier d'obturateur (315) adapté a la réception d'une portion du boîtier optique (304).

5. Source de rayons X selon l'une quelconque des revendications précédentes, dans laquelle le boîtier optique est rempli d'un gaz inerte.

6. Source de rayons X selon la revendication 5, dans laquelle le gaz inerte est l'helium.

7. Source de rayons X selon l'une quelconque des revendications précédentes, comprenant en outre un dispositif mobile d'arrêt pour faisceau de rayons X (307).

8. Appareil d'irradiation aux rayons X comprenant une source de rayons X selon l'une quelconque des revendications précédentes et des moyens pour maintenir un échantillon dans le chemin des rayons X de focalisation.

EP 1 462 794 B2

# Fig.1.

# Fig.2.

8

# Fig.3A.

301 303

302 306

X-RAY

309

304 305 308 307

A A

# Fig.3B.

315

312

316 317 318 319 320 321

311 314

313

Fig.4A.

Fig.4B.

Fig.4C.

# Fig.5.

**EP 1 462 794 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3940251 A1
- DE 4130566 A1
- EP 1193492 A1